# FASCICULE DE BREVET EUROPEEN

(11) **EP 0 534 828 B1**
(45) Date de publication et mention de la délivrance du brevet: **24.05.1995**
(21) Numéro de dépôt: 92402573.7
(22) Date de dépôt: 18.09.1992
(51) Int. Cl.: G01F 23/30, G01F 23/58

(54) **Détecteur du niveau à l'intérieur d'un récipient contenant un matériau granuleux, notamment du sable**
Füllstandsdetektor im Innern eines Behälters, der granuliertes Material, insbesondere Sand, enthält
Level detector in the interior of a recipient containing granular matter, particularly sand

(30) Priorité: 25.09.1991 FR 9111820
(43) Date de publication de la demande: 31.03.1993
(73) Titulaire: FORGES DE BELLES-ONDES, F-75009 Paris (FR)
(72) Inventeur: Chevrier, Pascal, F-77330 Ozoir-la-Ferriere (FR); Marcillaud, Roger, F-93390 Clichy-Sous-Bois (FR)
(74) Mandataire: Peuscet, Jacques

(56) Documents cités:
- DE-A- 1 648 149
- DE-A- 3 917 496
- GB-A- 1 287 395
- GB-A- 1 517 280

## Description

L'invention est relative à un détecteur de niveau à l'intérieur d'un récipient contenant un matériau granuleux, notamment du sable, le récipient comportant en partie basse un orifice à ouverture commandée pour permettre, lorsqu'on le souhaite, l'écoulement du matériau granuleux.

Les détecteurs de niveau, concernés par l'invention, sont du genre de ceux qui comprennent :
- un palpeur disposé à l'intérieur du récipient et monté mobile suivant une direction sensiblement verticale, le palpeur au repos se trouvant au voisinage d'un niveau supérieur ou égal à une limite de sécurité ;
- des moyens pour exercer une force sur le palpeur et assurer un déplacement du palpeur ;
- et des moyens avertisseurs commandés par le déplacement du palpeur lorsque ce dernier atteint un niveau inférieur à la limite de sécurité.

DE-A-1 648 149 montre un détecteur de ce genre. Le palpeur comprend une tige montée coulissante dans un support entraîné suivant un mouvement vertical alternatif. Lorsque le niveau de matériau granuleux est suffisant, dans le récipient, le palpeur se déplace en coulissement vers le haut, relativement au support. Le retour du palpeur dans sa position basse, en cas de baisse du niveau du matériau granuleux, est assuré, en principe, par le poids propre du palpeur. Toutefois, des frottements parasites ou des coincements peuvent se produire qui empêchent le retour du palpeur en position basse, de sorte qu'une baisse de niveau ne serait plus détectée.

On connaît, en outre, d'après DE-A-39 17 496 un détecteur de niveau comportant un palpeur, surmonté d'un aimant, suspendu à un support avec possibilité de déplacement transversal. Un contact électrique, sensible au champ magnétique de l'aimant, est prévu. Lorsque le niveau de matière granuleuse (selon les figures 9 et 10) dépasse une valeur prédéterminée, le palpeur et son aimant sont écartés du contact électrique qui change d'état.

GB-A- 1 287 395 concerne un détecteur de niveau à flotteur pour liquides. Un aimant, lié au flotteur, commande des contacts sensibles au champ magnétique de l'aimant. Un tel détecteur de niveau ne peut convenir à des matériaux granuleux solides.

GB-A-1 517 280 concerne également un détecteur de niveau à flotteur pour liquides, avec un aimant lié au flotteur, et un contact électrique sensible au champ magnétique. Un tel détecteur ne convient pas, non plus, à des matériaux granuleux solides.

L'invention concerne plus particulièrement, parce que c'est dans ce cas que son application semble devoir présenter le plus d'intérêt, mais non exclusivement, un détecteur de niveau pour une sablière associée à une roue de motrice.

L'invention a pour but, surtout, de fournir un détecteur qui donne une indication fiable sur le niveau de matériau granuleux à l'intérieur du récipient.

Ce problème est particulièrement aigu dans le cas d'une sablière associée à une roue de motrice car il s'agit alors d'un dispositif de sécurité. On sait en effet que la sablière est destinée, lors d'un freinage d'urgence, à répandre du sable sur le rail de chemin de fer, au-dessous de la roue freinée, pour accroître l'efficacité du freinage et réduire la distance d'arrêt. La sablière est aussi utilisée lors du démarrage pour améliorer l'adhérence. Le seuil de sécurité, à l'intérieur de la sablière, correspond à une quantité de sable suffisante pour se déverser pendant toute la durée d'un freinage conduisant à un arrêt complet du train, à partir de sa vitesse maximale possible sur le trajet considéré, ou d'un démarrage.

Selon l'invention, un détecteur de niveau à l'intérieur d'un récipient contenant un matériau granuleux, notamment du sable, est caractérisé par le fait que les moyens pour exercer une force sur le palpeur sont des moyens pneumatiques qui comprennent un piston lié à une tige portant le palpeur, et un passage de section réduite reliant les deux faces du piston, le fluide sous pression étant admis du côté du piston tourné vers le palpeur de sorte que, lorsque ce fluide sous pression est envoyé sur le piston, dans un premier temps le piston est sollicité vers le haut puis, après mise en pression à travers le passage de section réduite d'une chambre située au-dessus du piston, ce dernier est sollicité vers le bas.

Un bouton-poussoir, destiné à être actionné manuellement, est prévu pour la commande de ces moyens pneumatiques, ou électro-pneumatiques.

Le palpeur est avantageusement associé à un distributeur propre à commander des moyens avertisseurs agencés sous forme pneumatique, par envoi d'un fluide sous pression sur ces moyens avertisseurs lorsque le déplacement du palpeur et du distributeur lié à ce palpeur est suffisant.

Les moyens avertisseurs peuvent comprendre un indicateur visuel propre à faire saillie sous l'action d'un fluide sous pression lorsque l'opérateur appuie sur le bouton-poussoir et que le palpeur se déplace suffisamment, en raison d'un niveau du matériau granuleux inférieur à la limite de sécurité.

Le bouton-poussoir peut être rappelé en position de repos par des moyens élastiques et, dans cette position de repos, le bouton-poussoir assure la mise à l'atmosphère de la chambre où se trouve le piston qui commande le palpeur, et de la chambre de travail qui commande le déplacement du moyen indicateur visuel.

Le palpeur peut être solidaire d'une tige filetée qui comporte une butée réglable et qui est sollicitée par un moyen élastique de rappel prenant appui contre une partie fixe du détecteur, tandis qu'un élément cylindrique formant distributeur est vissé sur l'extrémité filetée supérieure de cette tige, le piston étant monté sur l'extrémité supérieure de l'élément formant distributeur.

Avantageusement le détecteur comporte une embase destinée à être fixée sur une paroi, un manchon fixé sur l'embase et bloquant, par serrage suivant la direction axiale, une chemise surmontée d'une bague, le manchon comportant un logement formant cylindre pour le piston et étant muni d'une ouverture latérale débouchant dans ce logement pour l'admission d'air comprimé, ledit élément cylindrique comportant un passage borgne qui débouche en partie haute et qui est relié, en partie basse, par au moins un passage radial à une gorge propre à communiquer, lorsque le palpeur s'est suffisamment déplacé, avec une chambre reliée aux moyens indicateurs.

Un tube peut être prévu pour entourer la tige filetée assurant la liaison entre le palpeur et le piston, ce tube étant fixé à son extrémité haute sur ladite embase, et supportant en partie basse, une sorte de cloche propre à servir de logement et de protection en position de repos.

L'invention consiste, mises à part les dispositions exposées ci-dessus, en un certain nombre d'autres dont il sera plus explicitement question ci-après à propos d'un exemple de réalisation décrit avec référence au dessins ci annexés, mais qui n'est nullement limitatif.

La figure 1, de ces dessins, est une vue schématique en coupe verticale partielle, avec partie en extérieur, d'un détecteur de niveau conforme à l'invention installé sur une sablière associée à une roue de train, alors que le bouton-poussoir est enfoncé, le niveau de sable étant suffisant.

La figure 2 montre le détecteur de la figure 1 alors que le niveau de sable est insuffisant et que le bouton-poussoir est enfoncé, avec déclenchement des moyens avertisseurs.

La figure 3 montre, semblablement aux figures 1 et 2, le détecteur de niveau alors que le bouton-poussoir est en position de repos et que le niveau de sable est inférieur à la limite de sécurité.

La figure 4 est une coupe à plus grande échelle d'un bloc pneumatique contenant le bouton-poussoir et l'indicateur pneumatique des moyens avertisseurs.

La figure 5, enfin, est une coupe verticale a plus grande échelle du palpeur et des moyens pneumatiques pour exercer une force sur ce palpeur.

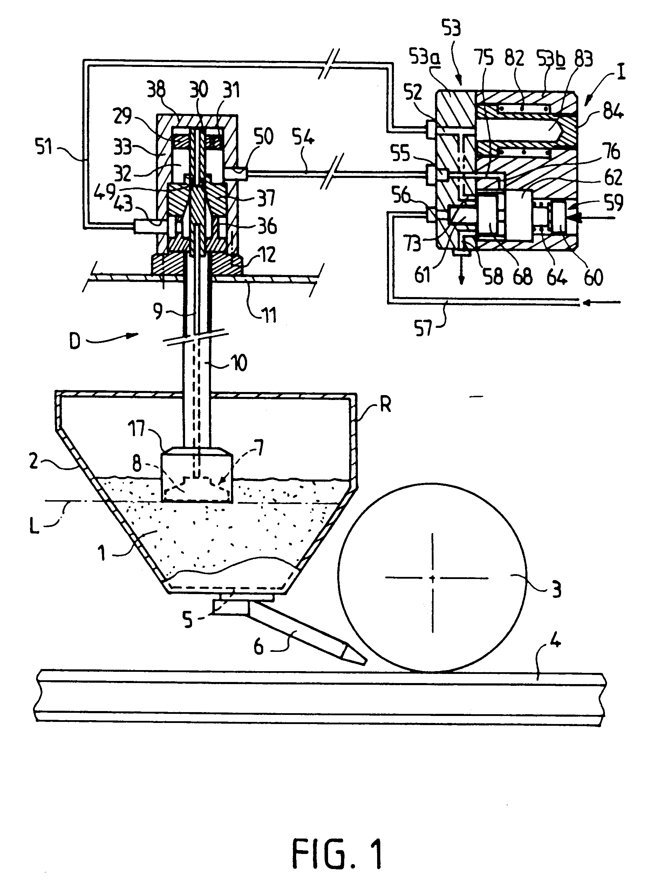

En se reportant aux dessins, notamment à la figure 1, on peut voir un détecteur de niveau D d'un matériau granuleux, constitué par du sable 1, à l'intérieur d'un récipient R constitué par une sablière 2. Cette sablière est associée à une roue 3 de train, à savoir une roue de locomotive ou une roue de voiture de chemin de fer propre à rouler sur un rail 4.

La sablière 2 comporte, en partie basse, un orifice 5 à ouverture commandée par des moyens non représentés sur le dessin.

Une tubulure 6 inclinée vers la roue et raccordée à cet orifice 5 dirige le sable vers la surface supérieure du rail 4 contre laquelle la roue 3 va rouler. L'extrémité inférieure de la tubulure 6 se trouve en avant de la roue 3, suivant le sens de déplacement de cette roue relativement au rail 4. Lorsque l'opérateur souhaite obtenir un freinage plus efficace, il commande l'ouverture de l'orifice 5 de sorte que le sable 1 s'écoule et vient se répandre sous la roue 3. Un tel dispositif est utilisé notamment en cas de freinage d'urgence, ou lors de démarrage. On conçoit donc qu'il est important de pouvoir vérifier si la sablière 2 contient une réserve de sable 1 suffisante pour permettre un écoulement de sable à chaque fois qu'il est nécessaire à tout moment du parcours complet du véhicule.

Le détecteur de niveau D est destiné à permettre à un opérateur de vérifier si la quantité de sable contenue dans la sablière 2 est suffisante, c'est-à-dire si le niveau supérieur du volume du sable 1 ne se trouve pas au-dessous d'une limite L prédéterminée.

Le détecteur D comprend un palpeur 7 disposé à l'intérieur de la sablière et monté mobile suivant une direction sensiblement verticale.

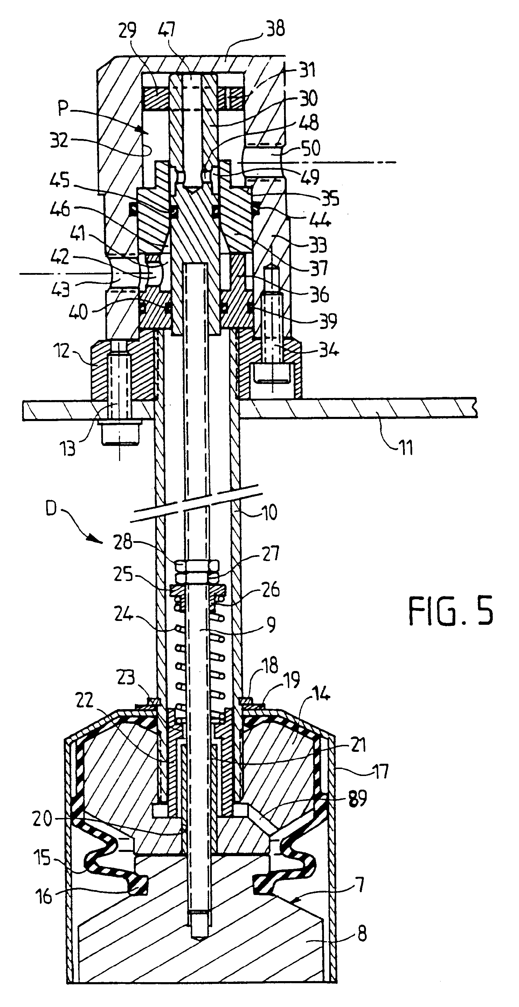

Ce palpeur 7, comme mieux visible sur la figure 5, comprend, à sa partie inférieure, une sorte de semelle 8, généralement à section transversale circulaire, comportant, sur sa face supérieure, un trou axial borgne dans lequel est vissé l'extrémité inférieure d'une tige filetée 9.

La tige 9 peut coulisser verticalement à l'intérieur d'un tube 10 bloqué sur une embase 12 fixe relativement à la sablière 2. Pour ce blocage, l'extrémité supérieure du tube 10 est filetée extérieurement et est vissée dans un trou taraudé d'une embase 12. Cette embase est fixée sur la paroi 11, du côté opposé à la semelle 8, à l'aide de vis 13 traversant la paroi et engagées dans des trous taraudés de l'embase 12.

A son extrémité inférieure, le tube 10 est également fileté sur sa surface extérieure et est vissé dans un trou taraudé d'un bloc 14 qui est entouré d'un soufflet 15 en matière élastomère.

Ce soufflet comporte, à sa partie inférieure, une ouverture délimitée par un bourrelet 16 engagé dans une rainure périphérique de la semelle 8.

Le soufflet 15 est lui-même recouvert par une pièce 17 en matière rigide, par exemple en métal, en forme de cloche et qui est arrêtée axialement, vers le haut, par une bague fendue 18 ancrée dans une gorge prévue à la périphérie du tube 10, avec interposition d'une rondelle 19.

Le blocage de la paroi transversale du fond supérieur de la pièce 17 contre la bague 18 est obtenu après vissage du bloc 14 sur l'extrémité inférieure filetée du tube 10.

La tige 9 traverse un trou 20 prévu à la base du bloc 14. Un manchon 21, en matière plastique, est monté autour de la partie de la tige 9 appelée à coulisser verticalement dans le trou 20 pour assurer le guidage de la tige et réduire les frottements.

Une douille 22, par exemple en matière plastique, est disposée à l'intérieur de l'extrémité inférieure du tube 10 et prend appui axialement contre le fond du logement du bloc 14 recevant le tube 10. La paroi extérieure de cette douille est en contact avec la surface interne du tube 10, tandis que la paroi interne de la douille 22 est écartée radialement de la surface extérieure du manchon 21.

Cette douille 22 comporte, vers son extrémité supérieure, un épaulement interne 23, faisant saillie radialement vers l'intérieur, tout en restant suffisamment écarté radialement de la surface de la tige 9.

La position de cet épaulement 23, suivant la direction axiale, est suffisamment haute pour que, lorsque la tige 9 occupe la position haute de repos représentée sur la figure 5, le manchon 21 ne soit pas en butée contre l'épaulement 23.

Cet épaulement 23 sert d'appui inférieur à des moyens élastiques de rappel de la tige 9, ces moyens de rappel étant constitués par un ressort de compression en hélice 24. L'extrémité supérieure du ressort 24 est en appui contre la collerette 25 d'une bague 26 enfilée coulissante sur la tige 9. Le blocage en position axiale de la bague 26 est assuré par un écrou 27 et un contre-écrou 28, vissés sur la tige 9 et qui permettent de régler la position axiale de la bague 26 et donc la tension du ressort 24.

Il est à noter qu'en position de repos de la tige 9 et de la semelle 8, c'est-à-dire en position haute, la surface inférieure de la semelle affleure l'extrémité inférieure de la cloche 17. Par ailleurs, le bloc 14 est traversé par au moins un canal 89 établissant une communication entre le logement intérieur du bloc 14 et le volume compris entre ce bloc et le soufflet 15, pour permettre un passage d'air.

L'ensemble est agencé de manière que lorsque le niveau du sable 1 est supérieur ou égal à la limite de sécurité L (voir figure 1) le palpeur 7 au repos se trouve au voisinage du sable ou dans le sable. Par l'expression "au voisinage", on englobe aussi le cas où le palpeur est juste au contact du sable.

La tige filetée 9 constitue une liaison mécanique entre des moyens P, pour exercer une force sur le palpeur 7, et ce palpeur. L'exercice de cette force permet d'assurer le déplacement du palpeur 7 en direction du sable lorsque le niveau de ce dernier est inférieur à la limite de sécurité L.

Comme bien visible sur la figure 5, les moyens P sont pneumatiques et comprennent un piston 29 monté sur un élément cylindrique 30 lié à la tige filetée 9 et constituant un distributeur.

Le piston 29 comporte un alésage central traversé par l'élément cylindrique 30 sur lequel le piston est fixé, légèrement en-dessous de l'extrémité supérieure de cet élément 30. Le piston 29 comporte au moins un passage 31 de section réduite le traversant complètement et faisant communiquer la chambre située au-dessous du piston 29 avec la chambre située au-dessus de ce piston.

Le piston 29 est propre à coulisser dans une chambre cylindrique 32 prévue à l'intérieur d'un manchon 33 fixé sur l'embase 12 par des vis 34. Le manchon 33 comporte un épaulement 35 en saillie radialement vers l'intérieur, marquant la séparation entre la chambre 32 située en partie haute et une zone inférieure de plus fort diamètre. L'épaulement 35 permet de bloquer par serrage contre l'embase 12, l'empilement d'une chemise 36 et d'une bague 37 dont la face inférieure est en appui contre la face supérieure de la chemise 36, et dont un bord supérieur est en butée contre l'épaulement 35.

L'extrémité supérieure du manchon 33 est fermée par un fond 38.

Un joint torique d'étanchéité 39, disposé dans une rainure périphérique de la chemise 36, est prévu entre cette chemise et la surface interne du manchon 33. Un autre joint torique 40 est prévu dans une rainure ménagée dans la paroi interne de la chemise 36 pour établir une étanchéité entre l'alésage de cette chemise et l'élément cylindrique 30. A un niveau supérieur à celui de ces joints, l'alésage interne de la chemise 36 présente un diamètre supérieur au diamètre extérieur de l'élément 30 de sorte qu'une chambre annulaire 41 est formée. Un orifice 42 traverse radialement la paroi de la chemise 36. Cet orifice 42 établit une communication entre la chambre 41 et un espace annulaire extérieur limité par la surface interne du manchon 33. Cet espace communique avec l'extérieur par un orifice taraudé 43 orienté radialement.

Un joint torique d'étanchéité 44 est disposé dans une gorge circulaire prévue dans la paroi interne du manchon 33 pour établir une étanchéité contre la surface externe de la bague 37. Un autre joint d'étanchéité 45 est disposé dans une gorge de l'élément 30 pour établir un coulissement étanche de cet élément 30 dans l'alésage de cette bague 37.

Cet alésage s'évase vers le bas par une partie tronconique 46 débouchant dans la chambre 41. Dans la position de repos (position haute) de l'élément 30 et du piston 31, le joint 45 établit une étanchéité au-dessus du début de la partie tronconique 46. Lorsque le détecteur est mis en action et que l'élément 30 descend, le joint 45 entre dans la partie 46 ou dans la chambre 42.

Le joint 44 établit une étanchéité au-dessus de la zone d'appui entre la chemise 36 et la bague 37.

L'élément cylindrique 30 comporte un canal axial borgne 47, s'ouvrant à l'extrémité supérieure de l'élément. Vers son extrémité inférieure, qui se situe au-dessus du niveau du joint 45, le canal 47 communique par des passages 48, orientés radialement, avec une gorge annulaire 49 prévue sur la surface extérieure de l'élément 30. Dans la position de repos de l'élément 30, représentée sur la figure 5, la gorge 49 est fermée radialement par la surface interne de la bague 37. Dans la position de travail de l'élément 30, ce dernier est suffisamment descendu, pour que la gorge 49 débouche dans la partie tronconique 46 ou dans la chambre 41.

La paroi de la chambre 32 est traversée par un orifice taraudé 50 débouchant au-dessus de l'épaulement 35, et au-dessous du piston 29.

L'appui éventuel de l'élément 30 contre le fond 38 n'est pas étanche et permet le passage d'un fluide gazeux de la chambre 32 vers le canal 47.

Comme visible sur la figure 1, l'orifice taraudé 43 est relié par une tubulure 51 à un orifice 52 d'un bloc 53.

L'orifice taraudé 50 est relié, par une tubulure 54, à un orifice 55 du bloc 53.

Un autre orifice 56 de ce bloc est raccordé à une tubulure 57 d'arrivée d'air comprimé.

Enfin, un orifice 58 d'échappement à l'atmosphère est prévu dans le bloc 53.

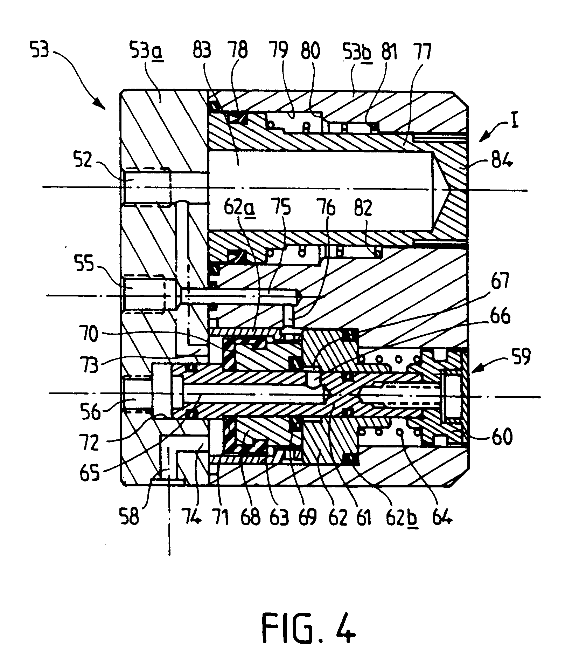

Le bloc 53 est réalisé en deux parties à savoir une partie frontale 53a (voir figure 4) dans laquelle sont prévus les susdits orifices, et une partie principale 53b comprenant un bouton 59 destiné à être actionné manuellement et des moyens avertisseurs I du type pneumatique.

Le bouton-poussoir 59 est monté coulissant dans un alésage de la partie 53b dont l'axe est orthogonal au plan moyen de la partie 53a, et est aligné avec celui de l'orifice 56. Le bouton 59 comporte une tête 60 fixée par exemple par vissage en bout d'un tiroir 61 propre à coulisser de manière étanche dans un bloc cylindrique 62, lui-même maintenu dans une chambre 63 de la partie 53b, par une douille 62a munie d'ouvertures de passage radial.

Un joint torique d'étanchéité 62b est logé dans une gorge du bloc 62 contre un épaulement de la partie 53b.

Un ressort de compression 64 est prévu entre le bloc 62 et la tête 60. Le tiroir 61 comporte un alésage borgne 65 débouchant à son extrémité opposée à la tête 60. Vers son extrémité fermée, l'alésage 65 communique par un passage radial 66 avec une chambre annulaire 67 du bloc 62.

Un clapet 68 est traversé par le tiroir 61 et comporte une gorge munie d'un joint torique 69 propre à s'appuyer contre la face transversale adjacente du bloc 62 lorsque le bouton de poussoir est dans la position de repos représenté sur la figure 4. Le clapet 68 est muni, à son extrémité éloignée du bloc 62, d'une coiffe frontale 70 en matière élastomère, en forme de disque, et pourvue d'une jupe annulaire venant s'ancrer par un rebord dans une gorge prévue à la périphérie du clapet 68. La coiffe 70 comporte un trou central traversé par le tiroir 61, lequel comporte un épaulement 71 servant de butée axiale à ladite coiffe 70 et au clapet 68. L'extrémité du tiroir 61 éloignée de la tête 60 est propre à coulisser de manière étanche grâce à un joint d'étanchéité dans un alésage 72 du bloc 53a, coaxial à l'orifice 56.

Les orifices 52 et 58 sont reliés, par des conduits prévus dans la partie 53a, à des orifices respectifs 73,74 débouchant dans la chambre 63 en vis-à-vis de la coiffe 70. Le clapet 68, lorsqu'il est actionné, vient appliquer la coiffe 70 contre la face en regard du bloc 53a et fermer les orifices 73 et 74. Dans la position de repos représentée sur la figure 4, la coiffe 70 est écartée axialement des orifices 73 et 74 qui peuvent communiquer par l'intermédiaire de la chambre 63.

L'orifice 55 communique avec un conduit borgne 75 coaxial prévu dans la partie 53b. Le conduit 75 communique, au voisinage de son extrémité fermée, par un passage radial 76 avec la chambre 63, à travers les passages radiaux de la douille 62a.

Les moyens avertisseurs I, du type pneumatique, comprennent un piston indicateur 77 propre à coulisser de manière étanche, grâce à un joint d'étanchéité 78 à lèvre, dans une chambre cylindrique 79 coaxiale à l'orifice 52, et d'axe parallèle à la chambre 63. Cette chambre 79, prévue dans la partie 53b, est ouverte à son extrémité tournée vers la partie 53a et comporte, du côté opposé, deux épaulements radiaux successifs 80,81.

L'épaulement 80 est propre à servir de butée fin de course à la partie de plus fort diamètre extérieur du piston 77. L'épaulement 81 sert d'appui à un ressort de rappel 82 disposé entre cet épaulement 81 et la partie de plus fort diamètre extérieur du piston 77. Ce piston comporte une chambre de travail borgne 83 communiquant avec l'orifice 52 et fermée à l'autre extrémité.

Lorsque de l'air sous pression est admis dans la chambre 83, le piston 77 se déplace vers la droite en comprimant le ressort 82 jusqu'à venir en butée contre l'épaulement 80. L'extrémité 84, située vers la droite du piston 77, est en saillie sur la face du bloc 53 et constitue un indicateur. Cette extrémité 84 peut être colorée, par exemple en rouge.

Ceci étant, le fonctionnement du détecteur conforme à l'invention est le suivant.

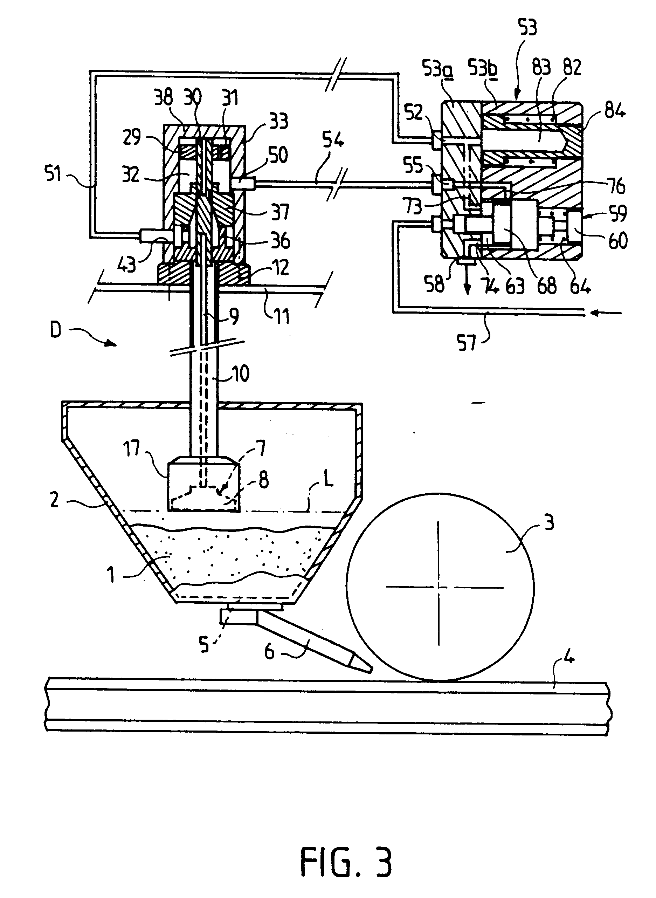

Dans la position de repos, représentée sur la figure 3, le bouton-poussoir 59 n'est pas enfoncé. Les orifices 73 et 76 communiquent avec la chambre 63 et avec l'échappement 58. De ce fait, la chambre 32 du manchon 33 est reliée à l'atmosphère par l'orifice 50, la tubulure 54, les orifices 55 et 76, la chambre 63 et l'échappement 58 ; le ressort 24 (voir figure 9) maintient l'élément 30 et le piston 29 dans la position haute de repos. Le palpeur 7 et sa semelle 8 sont également en position haute de repos.

La chambre 83 (voir figure 4) du piston 77 indicateur est également reliée à l'atmosphère de sorte que le ressort 82 maintient le piston 77 en position enfoncée, pour laquelle l'extrémité droite 84 de ce piston 77 affleure la face de la partie 53a.

Ainsi, lorsque le bouton-poussoir 59 n'est pas actionné, le piston 77 est toujours en position rentrée, que le niveau de sable 1 soit supérieur ou inférieur à la limite L.

L'air comprimé qui arrive par l'orifice 56 (voir figure 4) est confiné dans la chambre annulaire 67 fermée de manière étanche, sous l'action du ressort 64.

Pour contrôler le niveau du sable 1, dans la sablière 2, l'opérateur appuie sur le bouton-poussoir 59 comme illustré par une flèche sur la figure 1.

De ce fait, le tiroir 61 (voir figure 4) est déplacé de la droite vers la gauche, le ressort 64 étant comprimé.

Le déplacement de l'épaulement 71 vers la gauche de la figure 4 permet au clapet 68 de se déplacer sous l'action de l'air comprimé se trouvant dans la chambre 67.

La coiffe 70 est appliquée de manière étanche contre la face en regard de la partie 53a.

La course du tiroir 61, à l'intérieur de l'alésage 72, est suffisante pour que l'épaulement 71 ne gêne pas l'application de la coiffe 70 contre la partie 53a, l'épaulement 71 pénétrant légèrement à l'intérieur de l'alésage 72.

L'application de la coiffe 70 contre la face de la partie 53a provoque la fermeture des orifices 73 et 74.

L'air comprimé s'écoule par le passage 76 et le conduit 75 vers l'orifice 55 et parvient par le conduit 54 (voir figure 1) dans la chambre 32 à travers l'orifice 50 (voir figure 5).

L'air comprimé est appliqué sur la face inférieure du piston 29, alors que la face supérieure est soumise à une pression plus faible, car le passage 31 de section réduite retarde l'établissement de l'égalité de pression de part et d'autre du piston 29.

Si l'élément 30 n'est pas en butée contre le fond 38, c'est à dire en position haute de repos, l'admission d'air comprimé dans la chambre 32 provoque, dans un premier temps, cette mise en butée et confirme donc la position de repos du palpeur.

Puis, progressivement, l'air comprimé en traversant le passage 31 (figure 5) établit dans la chambre située au-dessus du piston 29 une pression égale à celle de la chambre située sous le piston 29.

La chambre située au-dessus du piston 29 a une section utile supérieure à celle de la chambre située au-dessous de ce piston 29, car la pression d'air comprimé peut s'appliquer également sur la section de l'élément 30.

Il en résulte un effet différenciel et la force exercée vers le bas par l'air comprimé sur le piston 29 l'emporte.

Si le niveau de sable dans la sablière 2 est suffisant (supérieur ou égal à la limite L), la semelle 8 est soit au contact du sable, dans sa position repos, ou très voisine de la surface du sable. Dans ces conditions, la force exercée vers le bas par le piston 29 et l'élément 30, et transmise à la semelle 8 par la tige 9, ne provoquera pas la descente du palpeur 7 et de la semelle 8, bloquée par le sable, ou ne provoquera qu'une descente limitée.

Ceci correspond au cas illustré sur la figure 1.

La gorge annulaire 49 (figure 5) n'étant pas suffisamment descendue, ne communique pas avec la partie évasée 46 et la chambre 41. L'air comprimé n'est pas admis à l'orifice 43 destiné à alimenter la chambre 83 (figure 4) du piston indicateur 77. Ce dernier reste donc dans sa position de repos, à l'intérieur du bloc 53.

L'opérateur qui a appuyé sur le bouton-poussoir 59, ne voyant pas sortir le piston indicateur 77, en déduit que le niveau du sable 1 dans la sablière 2 est suffisant.

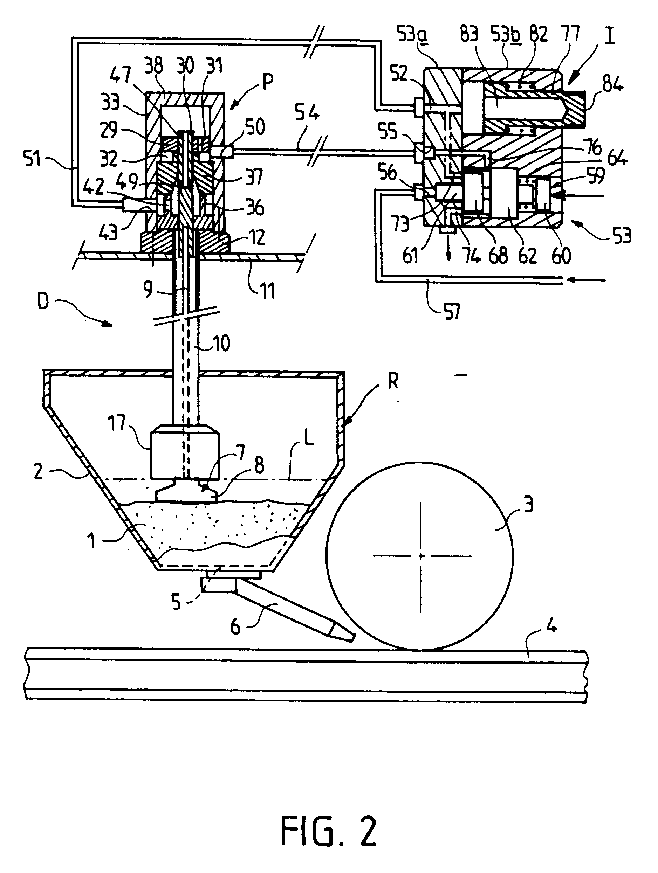

Par contre si le niveau du sable est inférieur à la limite L (voir figure 2) la force exercée par l'air comprimé sur le piston 29 et l'élément 30 provoque la descente de la tige 9 et de la semelle 8 avec compression du ressort 24. La fin de la descente peut être déterminée soit par la venue en contact de la semelle 8 avec le sable, soit par la venue en butée du piston 29 contre l'extrémité supérieure de la bague 37.

La course de l'élément 30 est suffisante pour que la gorge 49 débouche dans la partie tronconique 46 et/ou la chambre annulaire 41. Cette course, égale à celle du piston 29, est de l'ordre de 10 mm à 15 mm.

L'air comprimé peut donc passer, en provenance de la chambre située au-dessus du piston 29, par le canal borgne 47, le passage 48 et l'orifice 42 pour alimenter, à travers l'orifice 43, la tubulure 51.

L'air comprimé est donc admis à l'orifice 52 et dans la chambre 83 (figure 4) qui est isolée de l'atmosphère aussi longtemps que le bouton-poussoir 59 est enfoncé.

Sous l'action de cet air comprimé, le piston indicateur 77 se déplace vers la droite et fait saillie par son extrémité 84 sur le bloc 53 donnant ainsi à l'opérateur l'indication d'un niveau de sable insuffisant dans la sablière 2.

Lorsque l'opérateur cesse d'appuyer sur le bouton-pousoir 59, ce dernier revient dans la position de repos sous l'action du ressort 64 et entraîne, par son épaulement 71, le clapet 68.

La coiffe 70 est ainsi écartée des orifices 73 et 74.

La chambre 63 est mise à l'atmosphère puisqu'elle communique avec l'orifice 58.

L'orifice 52 et la chambre 83 sont également mis à l'atmosphère de sorte que le piston indicateur 77 reprend la position de repos illustrée sur la figure 4. Le conduit 76 communique également avec l'atmosphère de sorte que l'orifice 55, la tubulure 54, l'orifice 50 et la chambre 32 sont également mis à l'atmosphère. Sous l'action du ressort 24, la tige 9 peut monter et avec elle le piston 29 et la semelle 8 pour reprendre la position haute de repos de la figure 5.

Le détecteur conforme à l'inventionn permet d'obtenir une indication fiable et rapide du niveau de sable dans la sablière.

De nombreuses variantes de réalisation sont possibles et apparaîtront à l'homme du métier.

Par exemple, le trou axial 31 du piston supérieur 29 pourrait être remplacé par un jeu périphérique établissant lui aussi une communication, à section de passage réduite, entre les deux faces du piston.

La longueur du tube 10 est choisie de façon que la semelle soit sensiblement au niveau du seuil de sécurité L, à la course près du piston 29.

## Revendications

1. Détecteur de niveau d'un matériau granuleux (1), notamment du sable, à l'intérieur d'un récipient (R), en particulier à l'intérieur d'une sablière (2) associée à une roue de motrice (3), comprenant :
- un palpeur (7) disposé à l'intérieur du récipient (R) et monté mobile suivant une direction sensiblement verticale, le palpeur (7) au repos se trouvant au voisinage d'un niveau supérieur ou égal à une limite de sécurité (L) ;
- des moyens (P) pour exercer une force sur le palpeur (7) et assurer un déplacement du palpeur (7) ;
- et des moyens avertisseurs (I) commandés par le déplacement du palpeur (7) lorsque ce dernier atteint un niveau inférieur à la limite de sécurité (L),
caractérisé par le fait que les moyens (P) pour exercer une force sur le palpeur (7) sont des moyens pneumatiques qui comprennent un piston (29) lié à une tige (9) portant le palpeur (7), et un passage (31) de section réduite reliant les deux faces du piston (29), le fluide sous pression étant admis du côté du piston (29) tourné vers le palpeur (7) de sorte que, lorsque ce fluide sous pression est envoyé sur le piston (29), dans un premier temps le piston (29) est sollicité vers le haut puis, après mise en pression à travers le passage (31) de section réduite d'une chambre située au-dessus du piston (29), ce dernier est sollicité vers le bas.

2. Détecteur de niveau selon la revendication 1, caractérisé par le fait qu'un bouton-poussoir (59), destiné à être actionné manuellement, est prévu pour la commande des moyens pneumatiques (P).

3. Détecteur de niveau selon la revendication 1 ou 2, caractérisé par le fait que que le palpeur (7) est associé à un distributeur (30) propre à commander des moyens avertisseurs (I) agencés sous forme pneumatique, par envoi d'un fluide sous pression sur ces moyens avertisseurs (I) lorsque le déplacement du palpeur (7) et du distributeur (30) lié à ce palpeur est suffisant.

4. Détecteur de niveau selon la revendication 3, caractérisé par le fait que les moyens avertisseurs (I) comprennent un indicateur visuel (77) propre à faire saillie sous l'action d'un fluide sous pression lorsque l'opérateur appuie sur le bouton-poussoir (59) et que le palpeur se déplace suffisamment, en raison d'un niveau du matériau granuleux inférieur à la limite de sécurité.

5. Détecteur de niveau selon l'ensemble des revendications 2 et 4, caractérisé par le fait que le bouton-poussoir (59) est rappelé en position de repos par des moyens élastiques (64) et, dans cette position de repos, le bouton-poussoir assure la mise à l'atmosphère de la chambre (32) où se trouve le piston (29) qui commande le palpeur, et d'une chambre de travail (83) qui commande le déplacement du moyen indicateur visuel (77).

6. Détecteur de niveau selon la revendication 3, caractérisé par le fait que le palpeur (7) est solidaire d'une tige filetée (9) qui comporte une butée réglable (25, 26) et qui est sollicitée par un moyen élastique de rappel (24) prenant appui contre une partie fixe (23) du détecteur, tandis qu'un élément cylindrique (30) formant distributeur est vissé sur l'extrémité filetée supérieure de cette tige, le piston (29) étant monté sur l'extrémité supérieure de l'élément (30) formant distributeur.

7. Détecteur de niveau selon la revendication 6, caractérisé par le fait qu'il comporte une embase (12) destinée à être fixée sur une paroi (11), un manchon (33) fixé sur l'embase et bloquant, par serrage suivant la direction axiale, une chemise (36) surmontée d'une bague (37), le manchon (33) comportant un logement formant cylindre (32) pour le piston (29) et étant muni d'une ouverture latérale (50) débouchant dans ce logement pour l'admission d'air comprimé, ledit élément cylindrique (30) comportant un passage borgne (47) qui débouche en partie haute et qui est relié, en partie basse, par au moins un passage radial (48) à une gorge (49) propre à communiquer, lorsque le palpeur s'est suffisamment déplacé, avec une chambre (41) reliée aux moyens indicateurs (I).

8. Détecteur de niveau selon la revendication 6 ou 7, caractérisé par le fait qu'un tube (10) est prévu pour entourer la tige filetée (9) assurant la liaison entre le palpeur (7) et le piston (29), ce tube (10) étant fixé à son extrémité haute sur ladite embase (12), et supportant en partie basse, une sorte de cloche (17) propre à servir de logement et de protection au palpeur en position de repos.

## Patentansprüche

1. Füllstandsdetektor für granuliertes Material (1), insbesondere für Sand, im Inneren eines Behälters (R), insbesondere im Inneren eines Sandkastens (2), der mit dem Rad eines Triebwagens (3) zusammenwirkt, mit:
- einem im Inneren des Behälters (R) angeordneten Fühler (7), der entlang einer vertikalen Meßrichtung beweglich beweglich angeordnet ist, wobei sich der Fühler (7) in Ruhestellung in der Nähe eines oberen Niveaus oder gleichauf mit einer Sicherheitsgrenze (L) befindet,
- Mitteln (P) zum Ausüben einer Kraft auf den Fühler (7) und zum Versetzen des Fühlers (7)
- und Warnmitteln (I), die durch Versetzen des Fühlers (7) betätigt werden, wenn letzterer ein Niveau unterhalb der Sicherheitsgrenze (L) erreicht,
dadurch gekennzeichnet, daß als Mittel (P) zum Ausüben einer Kraft auf den Fühler (7) pneumatische Mittel vorgesehen sind, die einen Kolben (29) umfassen, der mit einer Stange (9) verbunden ist, die den Fühler (7) aufnimmt, daß die beiden Stirnseiten des Kolbens (29) über einen Kanal (31) mit verringertem Querschnitt miteinander verbunden sind, und daß das unter Druck stehende Fluid an der Seite des Kolbens (29) eintritt und sich in Richtung des Fühlers (7) derart bewegt, daß, wenn der Kolben (29) beaufschlagt wird, dieser zunächst in Richtung nach oben belastet wird und anschließend, nachdem er durch den Kanal (31) mit verringertem Querschnitt hindurch in einem oberhalb des Kolbens (29) angeordneten Raum unter Druck gesetzt wurde, nach unten belastet wird.

2. Füllstandsdetektor nach Anspruch 1, dadurch gekennzeichnet, daß ein Druckknopf (59) zur manuellen Betätigung vorgesehen ist, um die pneumatischen Mittel zu steuern.

3. Füllstandsdetektor nach Anspruch 1 oder 2, dadurch gekennzeichnet, daß der Fühler (7) an einen Verteiler (30) angeschlossen ist, mit welchem die Warnmittel (I) pneumatisch durch Beaufschlagung mit einem unter Druck stehenden Fluid steuerbar sind, wenn der Fühler (7) und der mit diesem verbundene Verteiler (30) ausreichend versetzt werden.

4. Füllstandsdetektor nach Anspruch 3, dadurch gekennzeichnet, daß die Warnmittel (I) eine visuelle Anzeige (77) umfassen, die unter der Einwirkung eines unter Druck stehenden Fluids hervorspringt, wenn der Bediener den Druckknopf (59) betätigt und sich der Fühler (7) aufgrund dessen, daß sich der Füllstand des granulierten Materials (1) unterhalb der Sicherheitsgrenze (L) befindet, ausreichend verschiebt.

5. Füllstandsdetektor nach Anspruch 2 und 4, dadurch gekennzeichnet, daß der Druckknopf (59) mit elastischen Mitteln (64) in der Ruhestellung gehalten wird und daß der Druckknopf (59) in dieser Ruhestellung das Eindringen der Atmosphäre in den Raum (32) gewährleistet, wo der Kolben (29) angeordnet ist, der den Fühler (7) steuert, und das Eindringen der Atmosphäre in einen Arbeitsraum (83) gewährleistet, der die Versetzung der visuellen Anzeige (77) steuert.

6. Füllstandsdetektor nach Anspruch 3, dadurch gekennzeichnet, daß der Fühler (7) mit einer Gewindestange (9) verbunden ist, die einen verstellbaren Anschlag (25, 26) aufweist und die mit einem elastischen Rückhaltemittel (24) belastet wird, welches sich gegen einen festen Teil (23) des Anzeigers abstützt, während ein zylindrisches Element (30), welches den Verteiler bildet, auf dem mit Gewinde versehenen oberen Ende der Stange aufgeschraubt ist und der Kolben (29) auf dem oberen Ende des Elements (30), welches den Verteiler bildet, aufgeschraubt ist.

7. Füllstandsdetektor nach Anspruch 6, dadurch gekennzeichnet, daß der Füllstandsdetektor einen Sockel (12) zur Befestigung an einer Wandung (11), einen auf dem Sockel (12) in axialer Richtung verschraubten Stutzen (33) und einen Mantel (36) aufweist, über dem sich eine Buchse (37) erstreckt, wobei der Stutzen (33) ein zylinderförmiges Gehäuse (32) für den Kolben (29) aufweist und mit einer seitlichen Öffnung (50) versehen ist, die in das Gehäuse (32) mündet, um Druckluft zuzuführen, und das zylindrische Element (30) einen Blindkanal (47) aufweist, der in seinem oberen Bereich geöffnet ist und in seinem unteren Bereich mittels eines sich radial erstreckenden Kanals (48) mit einer Auskehlung (49) verbunden ist, die, wenn der Fühler (7) ausreichend versetzt wurde, mit einem Raum (41) kommuniziert, der mit den Anzeigemitteln (I) verbunden ist.

8. Füllstandsdetektor nach Anspruch 6 oder 7, dadurch gekennzeichnet, daß ein Rohr (10) zur Umkleidung der Gewindestange (9) vorgesehen ist, die die Verbindung zwischen dem Fühler (7) und dem Kolben (29) gewährleistet, daß das Rohr (10) an seinem oberen Ende an dem Sockel (12) befestigt ist und an seinem unteren Ende eine Art Glocke (17) trägt, die ein Gehäuse und einen Schutz für den Fühler (7) in Ruhestellung bildet.

## Claims

1. Detector of the level of a granular material (1), especially sand, inside a container (R), in particular inside sanding gear (2) associated with a driving wheel (3), comprising:
- a feeler (7) arranged inside the container (R) and mounted so that it can move in a substantially vertical direction, the feeler (7) at rest being located in the vicinity of a level greater than or equal to a safety limit (L);
- means (P) for exerting a force on the feeler (7), and providing for a movement of the feeler (7);
- and warning means (I) controlled by the movement of the feeler (7) when the latter reaches a level lower than the safety limit (L),
characterized in that the means (P) for exerting a force on the feeler (7) are pneumatic means which comprise a piston (29) connected to a rod (9) carrying the feeler (7), and a passage (31) of reduced cross-section connecting the two faces of the piston (29), the pressurized fluid being admitted on the side of the piston (29) which points towards the feeler (7) so that when this pressurized fluid is sent onto the piston (29), the piston (29) is, in a first instance, stressed upwards and then, after a chamber located above the piston (29) is pressurized through the passage (31) of reduced cross-section, this piston is stressed downwards.

2. Level detector according to Claim 1, characterized in that a push-button (59), intended to be actuated manually, is provided for controlling the pneumatic means (P).

3. Level detector according to Claim 1 or 2, characterized in that the feeler (7) is associated with a distributor (30) capable of controlling warning means (I) set out in pneumatic form, by sending a pressurized fluid to these warning means (I) when the movement of the feeler (7), and of the distributor (30) connected to this feeler, is sufficient.

4. Level detector according to Claim 3, characterized in that the warning means (I) comprise a visual indicator (77) capable of projecting under the action of a pressurized fluid when the operator presses on the push-button (59), and when the feeler moves sufficiently, as a result of a level of granular material which is lower than the safety limit.

5. Level detector according to Claims 2 and 4 taken together, characterized in that the push-button (59) is returned to the rest position by elastic means (64) and, in this rest position, the push-button vents to atmosphere both the chamber (32) in which is located the piston (29) which controls the feeler, and a working chamber (83) which controls the movement of the visual indicator means (77).

6. Level detector according to Claim 3, characterized in that the feeler (7) is secured to a threaded rod (9) which includes an adjustable stop (25, 26) and which is stressed by an elastic return means (24) bearing against a stationary part (23) of the detector, whereas a cylindrical element (30) forming a distributor is screwed onto the upper threaded end of this rod, the piston (29) being mounted on the upper end of the element (30) forming a distributor.

7. Level detector according to Claim 6, characterized in that it includes a base (12) intended to be fixed to a wall (11), a sleeve tube (33) fixed onto the base and blocking, by clamping in the axial direction, a liner (36) surmounted by a ring (37), the sleeve tube (33) including a housing forming a cylinder (32) for the piston (29), and being provided with a lateral opening (50) which opens out into this housing for the admission of compressed air, the said cylindrical element (30) including a blind passage (47) which opens out in the top part and which is connected, at the bottom part, by at least one radial passage (48) to a groove (49) capable of communicating, when the feeler has moved sufficiently, with a chamber (41) connected to the indicator means (I).

8. Level detector according to Claim 6 or 7, characterized in that a tube (10) is provided for surrounding the threaded rod (9) providing the connection between the feeler (7) and the piston (29), this tube (10) being fixed at its top end to the said base (12), and supporting at the bottom part a sort of bell (17) capable of acting as a housing and as protection for the feeler in the rest position.
